(19) **Europäisches Patentamt**
**European Patent Office**
**Office européen des brevets**

(11) **EP 2 032 962 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(21) Anmeldenummer: 07729807.3

(22) Anmeldetag: **01.06.2007**

(51) Int Cl.:
***G01M 3/20*** *(2006.01)*

(86) Internationale Anmeldenummer:
**PCT/EP2007/055412**

(87) Internationale Veröffentlichungsnummer:
**WO 2007/147717 (27.12.2007 Gazette 2007/52)**

(54) **LECKSUCHGERÄT**

LEAK DETECTOR

DÉTECTEUR DE FUITES

(84) Benannte Vertragsstaaten:
**DE FR GB IT SE**

(30) Priorität: **23.06.2006 DE 102006028778**

(43) Veröffentlichungstag der Anmeldung:
**11.03.2009 Patentblatt 2009/11**

(73) Patentinhaber: **Inficon GmbH**
**50968 Köln (DE)**

(72) Erfinder:
• **ROLFF, Norbert**
**50169 Kerpen (DE)**
• **ROLFF, Randolf**
**50169 Kerpen (DE)**
• **SEITZ, Sandra**
**40223 Düsseldorf (DE)**
• **GROSSE BLEY, Werner**
**53125 Bonn (DE)**
• **BÖHM, Thomas**
**50859 Köln-Lövenich (DE)**
• **WETZIG, Daniel**
**50999 Köln (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
WO-A-02/084246          DE-A1- 10 308 687
DE-U1-202005 011 372    JP-A- 6 102 134

EP 2 032 962 B1

**Beschreibung**

Die Erfindung betrifft ein Lecksuchgerät mit einem Grundgerät, das eine Vakuumpumpe, einen Testgasdetektor und eine Steuereinrichtung enthält, einer durch einen Schlauch mit dem Gehäuse des Grundgerätes verbundenen Schnüffelsonde und einem Subgehäuse, das eine Testleckeinrichtung enthält, welche einen Testgasvorrat kontrolliert in einen Einsteckkanal für die Schnüffelsonde ablässt.

Testgas-Lecksuchgeräte dienen zur Lecksuche an Behältern, Leitungen und anderen Prüflingen. Dabei wird ein Hohlraum des Prüflings mit einem Testgas gefüllt und mit dem Lecksuchgerät wird festgestellt, ob außerhalb des Prüflings Testgas in der Umgebungsluft auftritt. Als Testgas wird häufig Helium benutzt. Das Lecksuchgerät enthält einen Testgasdetektor, der im Stande ist, das Vorhandensein des Testgases selektiv zu ermitteln. Darüber hinaus will man Aufschluss über die Austrittsrate des Testgases aus dem gefundenen Leck bzw. die Leckgröße erlangen. Zu diesem Zweck muss das Lecksuchgerät häufig kalibriert werden. Dies geschieht mit Hilfe eines Testlecks. Ein Testleck weist ein Loch bzw. eine Engstelle mit bekanntem Leitwert auf, die mit einem Testgasvorrat, der unter Druck steht, verbunden ist. Zur Kalibrierung eines Lecksuchgerätes mit einer Schnüffelsonde wird die Schnüffelsonde in die Nähe des Testlecks gebracht, so dass die Leckanzeige abgeglichen werden kann.

Bei einem Lecksuchgerät, das in WO 02/084246 A2 beschreiben ist, ist die Testleckeinrichtung in dem Gehäuse des Grundgerätes unterhalb der Grundkomponenten angeordnet, wobei das Gehäuse von unten nach oben von Kühlluft durchströmt ist.

In DE 103 08 687 A1 ist ein Lecksuchgerät beschrieben, das ein stationäres Grundgerät und eine in einem Subgehäuse untergebrachte Testleckeinrichtung aufweist. Die Testleckeinrichtung ist mit dem Hauptgehäuse des Grundgerätes über ein Kabel oder eine drahtlose Funkstrecke verbunden. Sie weist ein Subgehäuse auf, in dem ein Testgasvorrat in einem Testgasbehälter enthalten ist. An dem Subgehäuse sind ein Datenspeicher und ein Temperatursensor angebracht. Das Subgehäuse weist einen Einsteckkanal zum Einstecken einer Schnüffelsonde des Lecksuchgerätes auf. Ferner enthält das Subgehäuse eine Membran mit einer definierten Engstelle, die von dem Testgas, das aus dem Testgasvorrat austritt, in kontrollierter Rate durchströmt wird. Das Gas strömt in einen Einsteckkanal, in den die Schnüffelsonde eingesteckt wird. Auf diese Weise saugt die Schnüffelsonde das austretende Testgas ein. Da die Ausströmrate bekannt ist, kann das Lecksuchgerät kalibriert werden. Durch den Einsteckkanal des Druckbehälters erstreckt sich eine Lichtschranke quer hindurch. Die Lichtschranke bildet einen Sensor zur Prüfung der Anwesenheit der Schnüffelsonde in dem Einsteckkanal.

Der Erfindung liegt die Aufgabe zugrunde, ein Lecksuchgerät zu schaffen, bei dem die Testleckeinrichtung in einem Subgehäuse enthalten ist, um die Datenübertragung zu verbessern und die Genauigkeit der Kalibrierung zu verbessern.

Das erfindungsgemäße Lecksuchgerät ist durch den Patentanspruch 1 definiert. Hiernach enthält das Subgehäuse einen Prozessor, der mindestens einen Parameter der Testleckeinrichtung verarbeitet und in Datenkommunikation mit der im Gehäuse des Grundgerätes enthaltenen Steuerungseinrichtung steht.

Erfindungsgemäß ist die Testleckeinrichtung mit einem eigenen Prozessor ausgestattet, zur Reduzierung der Anzahl der Verbindungsleitungen zum Grundgerät und zur Verbesserung der Eigenschaften der in dem Subgehäuse enthaltenen Sensoren. Der Prozessor verarbeitet die anfallenden Daten und führt ggf. eine Datenkorrektur aus. Vorzugsweise bewirkt der Prozessor auch eine Modulation des Lichtschrankensignals, so dass eine Trennung des Lichtschrankensignals von Störsignalen möglich ist. Dadurch kann der Einfluss störender anderer Lichtquellen und der Einfluss der Dämpfung des Lichts durch Schmutz erheblich verringert werden. Weiterhin wird das Signal gefiltert, wodurch eine zusätzliche Verbesserung der Signalzuverlässigkeit entsteht.

Die Testleckströmung ist in hohem Maße temperaturabhängig. Zur genauen Temperaturbestimmung sollte eine Nullpunktkorrektur und eine Verstärkungskorrektur des Signals eines Temperatursensors erfolgen. Die dafür benötigten Werte können in einem Datenspeicher, der ebenfalls in der Testleckeinrichtung untergebracht sein kann, gespeichert werden. Die Genauigkeit der Temperaturmessung wird verbessert und die Auswirkungen von Exemplarstreuungen werden reduziert.

In dem Datenspeicher können auch Daten über die Eigenschaften des Testgasvorrates gespeichert werden. Hierzu gehören Daten über die Gasart, die Temperaturabhängigkeit und/oder Alterung des Testgases. Unter "Alterung" ist die Druckabnahme des Testgases bei Lecks, die nicht im Sättigungsdampfdruck arbeiten, zu verstehen. Möglich wird die Berücksichtigung der Alterung durch zusätzliches Speichern des Fülldatums und der Leckrate.

Gemäß einer bevorzugten Weiterbildung der Erfindung enthält der Einsteckkanal ein Rohr, welches nach außen gegen die Umgebung des Testgasvorrats abgedichtet ist. Das Rohr begrenzt den umfangsmäßig geschlossenen Einsteckkanal und bildet den einzigen Weg zum Entweichen des Testgases. Damit wird die Auslassgenauigkeit der von der Testleckvorrichtung ausgegebenen Leckströmung erhöht, weil sich keine Nebenströmungswege bilden. Ferner wird auch das Eindringen von Schmutz in die Testleckeinrichtung, sei es durch Staubablagerungen oder durch Schmutz, der mit der Schnüffelsonde eingebracht wird, erschwert.

Eine Weiterbildung der Erfindung sieht vor, dass das Subgehäuse in einer nach außen hin offenen Aufnahme des Gehäuses des Grundgerätes herausnehmbar enthalten ist, wobei die Testleckeinrichtung sowohl im herausgenommenen Zustand als auch im eingesetzten Zustand funktionsfähig ist.

Die Testleckeinrichtung kann also im eingesetzten Zustand oder im herausgenommenen Zustand wahlweise benutzt werden. Im eingesetzten Zustand besteht der Vorteil, dass der Benutzer nur ein einziges Gerät, nämlich das Grundgerät, transportieren und handhaben muss. Im herausgenommenen Zustand besteht der Vorteil, dass das Testleck in eine für den Benutzer günstige Position gebracht werden kann, unabhängig von der Position, in der sich das stationäre Grundgerät befindet. Das Subgehäuse ist daher gegenüber dem Gehäuse des Grundgerätes mobil, kann jedoch derart an dem Grundgerät befestigt werden, dass die eigenständige Mobilität aufgegeben wird. Die Testleckeinrichtung bildet eine aus dem Grundgerät herausnehmbare Einheit mit Schnittstellenkabel oder Funkstrecke bidirektionaler Datenkanal für die Datenkommunikation mit dem Grundgerät.

Gemäß einer weiteren bevorzugten Ausgestaltung der Erfindung ist vorgesehen, dass der Einsteckkanal eine Strahlungsschranke mit einem Strahlungssender und einem Strahlungsempfänger aufweist, die auf unterschiedlichen Seiten des Einsteckkanals angeordnet sind, und dass das Rohr aus strahlungsdurchlässigem Material besteht. Vorzugsweise ist die Strahlungsschranke eine Lichtschrank und das Rohr ist durchsichtig. Das Rohr kann aus Glas oder Kunststoff bestehen. Es nimmt in Längsrichtung die Schnüffelsonde auf und lässt in Querrichtung Licht durch. Das durchsichtige Rohr vermeidet einerseits, dass sich im Bereich des Lichtstrahls Ablagerungen absetzen, und weiterhin, dass Testgas in das Innere des Gerätes bzw. des Gehäuses der Testleckeinrichtung eindringen kann. Das Testgas kann sich also nur in dem dafür vorgesehenen Bereich aufhalten und sich nicht im Geräteinneren im Bereich der Elektronik hinein ausbreiten.

Im Folgenden wird ein Ausführungsbeispiel der Erfindung unter Bezugnahme auf die Zeichnung näher erläutert.

Es zeigen:

Fig. 1    eine Gesamtdarstellung des Lecksuchgerätes mit Grundgerät und Testleckeinrichtung,

Fig. 2    eine Teil-Frontansicht des Grundgerätes mit eingesetzter Testleckeinrichtung,

Fig. 3    eine perspektivische Darstellung der Rückseite des Subgehäuses und der Aufnahme des Gehäuses des Grundgerätes mit den beiden Anschlüssen, die zusammensteckbar sind, und

Fig. 4    einen schematischen Längsschnitt durch das Subgehäuse mit der daran befestigten Kartusche, wobei das Subgehäuse aus dem Gehäuse des Grundgeräts herausgenommen ist.

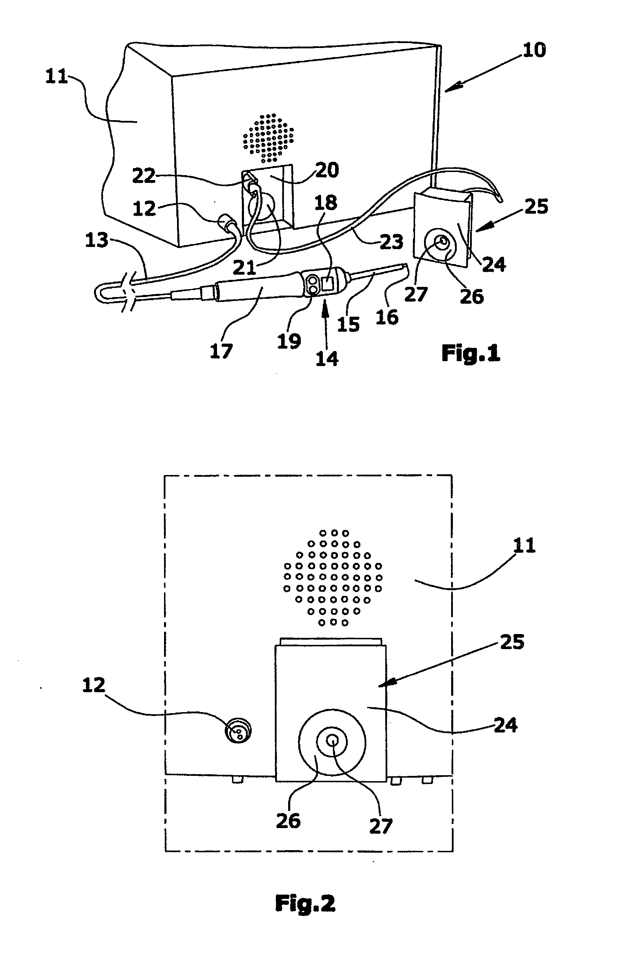

Das Lecksuchgerät weist gemäß Figur 1 ein Grundgerät 10 mit einem Gehäuse 11 auf. Das Grundgerät 10 enthält die für die Lecksuche und Testgaserkennung nötigen Komponenten, wie Vakuumpumpe, Testgasdetektor und Steuereinrichtung sowie die erforderlichen Hilfsaggregate. Diese sind im Einzelnen in WO 02/084246 A2 und in DE 103 08 687 A1 beschrieben.

Gemäß Figur 1 weist das Gehäuse 11 an seiner Frontseite eine Steckerfassung 12 für das Kabel 13 einer Schnüffelsonde 14 auf. Die mobile Schnüffelsonde 14 ist mit einer stabförmigen Schnüffelspitze 15 versehen, die an ihrem Ende eine Ansaugöffnung 16 aufweist. Die Schnüffelsonde 14 hat ferner einen Handgriff 17, ein Display 18 sowie Steuertasten 19. Durch das Kabel 13 hindurch verläuft auch ein Schlauchlumen, das die Ansaugöffnung 16 mit der im Gehäuse 11 vorhandenen Saugquelle verbindet.

Das Gehäuse 11 ist ferner an seiner Frontseite mit einer Aufnahme 20 versehen. Hierbei handelt es sich um eine Einbuchtung oder Ausnehmung, die nach vorne offen ist. In der Aufnahme 20 befindet sich ein Tunnel 21 und eine Steckvorrichtung 22. Die Steckvorrichtung 22 dient zum Einstecken eines Datenkabels 23, dessen anderes Ende mit dem Subgehäuse 24 der Testleckeinrichtung 25 verbunden ist. Das Subgehäuse 24 passt in die Aufnahme 20 hinein. Es kann alternativ am Grundgerät oder als bewegliche Einheit benutzt werden. Das Subgehäuse 24 enthält in seiner Frontwand eine Zentriermulde 26, an deren Grund sich das vordere Ende des Einsteckkanals 27 befindet. Der Einsteckkanal dient zum Einführen der Schnüffelspitze 15 der Schnüffelsonde 14.

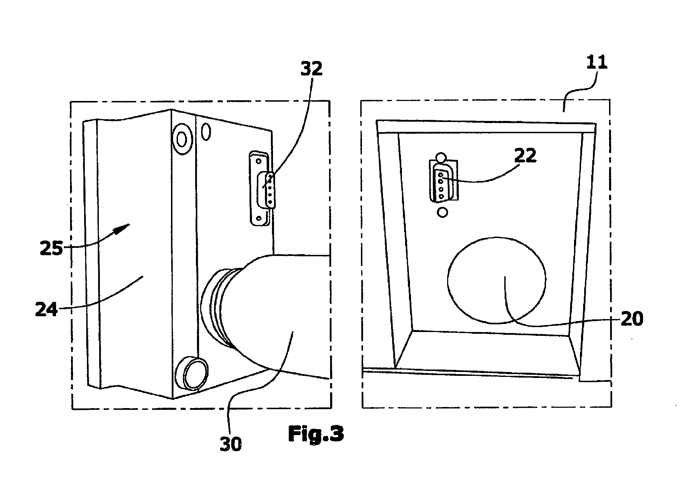

Figur 3 zeigt die Rückseite des Subgehäuses 24. Von der Rückwand steht eine Kartusche 30 frei nach hinten ab, die abdichtend an dem Subgehäuse 24 befestigt ist. Die Kartusche 30 dient zur Aufnahme des Testgasvorrats 46, der in einem auswechselbaren Testgasbehälter 47 enthalten ist. Ferner ist an der Rückwand des Subgehäuses 24 eine Steckvorrichtung 32 vorgesehen, die mit der Steckvorrichtung 22 des Gehäuses 11 zusammenpasst. Beide Steckvorrichtungen 22, 32 sind mehrpolig und dienen der Datenkommunikation zwischen der Testleckeinrichtung 25 und dem Grundgerät 10. Alternativ zu dem direkten Zusammenstecken der Steckvorrichtungen 22 und 32 können diese durch das Datenkabel 23 verbunden werden, wie dies in Figur 1 dargestellt ist.

Im Grundgerät 10 und in der Testleckeinrichtung 25 befindet sich jeweils eine serielle Schnittstelle, beispielsweise die genormte Schnittstelle RS232. Damit ergibt sich für das Datenkabel 23 eine geringe Adernzahl. Im einfachsten Fall sind außer zwei Leitungen für die Versorgungsspannung der Testleckeinrichtung jeweils eine Hin- und eine Rückleitung für die Datenübertragung erforderlich.

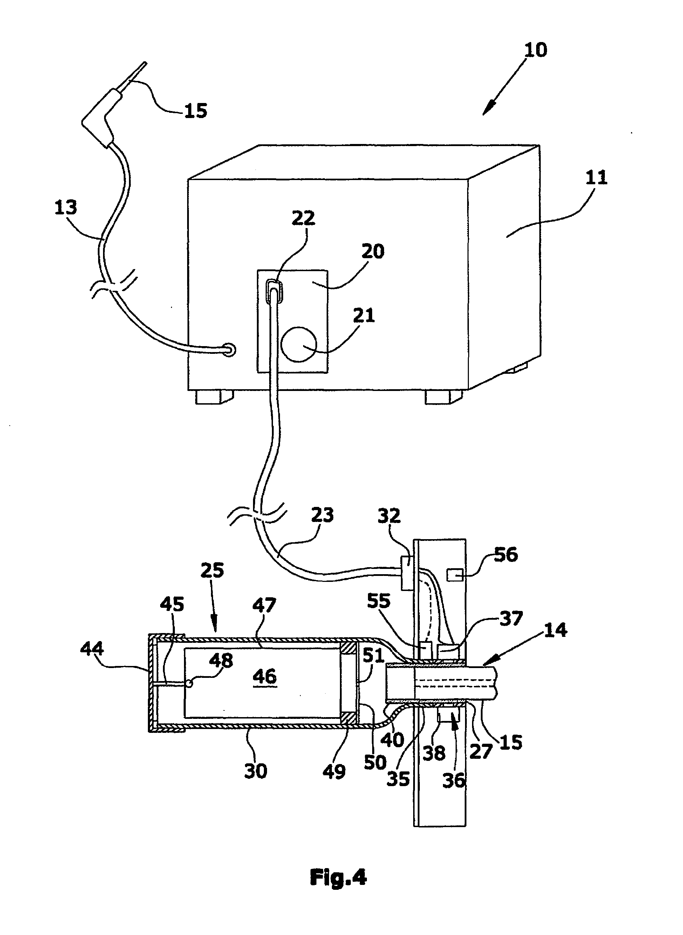

Figur 4 zeigt das Grundgerät 10 und die Testleckeinrichtung 25, wobei die Testleckeinrichtung zur Verdeutlichung des inneren Aufbaus vergrößert dargestellt ist.

Das Subgehäuse 24 enthält den Einsteckkanal 27 für die Schnüffelspitze 15 der Schnüffelsonde 14. Der Einsteckkanal ist von einer rohrförmigen Wand 35 umgeben, die mit der Kartusche 30 druckdicht verbunden ist. An dem Einsteckkanal ist eine Strahlungsschranke 36 vorgesehen, die aus einem Strahlungssender 37 und einem auf der gegenüberliegenden Seite angeordneten Strahlungsempfänger 38 besteht. Die Strahlungsschranke ist beispielsweise eine mit sichtbarem Licht arbeitende Lichtschranke. Zum Durchlassen des Lichts sind in der Seitenwand der den Einsteckkanal umgebenden Wand 35 Öffnungen vorgesehen.

In die rohrförmige Wand 35 ist ein Rohr 40 aus durchsichtigem Material, beispielsweise Quarzglas oder Kunststoff, abdichtend eingesetzt. Das Rohr 40 dient einerseits zum Schutz der Strahlungsschranke 36 gegen Verschmutzung und andererseits der Verhinderung des Austretens von Testgas sowohl in die Umgebung als auch in das Innere des Subgehäuses 24.

Die Kartusche 30 ragt frei nach hinten aus dem Subgehäuse 24 heraus. Sie enthält einen abnehmbaren Boden 44, der beispielsweise angeschraubt ist und ist druckdicht. Von dem Boden 44 steht ein Dorn 45 in das Innere der Kartusche ab. Die Kartusche enthält den Testgasvorrat 46, der in einem auswechselbaren Testgasbehälter 47 enthalten ist. Der Dorn 45 öffnet ein Rückschlagventil 48 im Boden des Testgasbehälters 47, so dass bei verschlossener Kartusche 30 Testgas in die Kartusche eindringt. Das vordere Ende des Testgasbehälters 47 ist an einem Flansch 49 im Innern der Kartusche abgestützt. Dieser Flansch trägt eine Membran 50, die das Testleck 51 in Form einer definierten Öffnung enthält.

In dem Subgehäuse 24 ist in thermischem Kontakt mit der aus wärmeleitfähigem Material bestehenden Kartusche 30 ein Temperatursensor 55 angeordnet. Ferner enthält das Subgehäuse einen Datenspeicher 56 in Form eines EEPROM sowie einen Prozessor 57, der im Datenaustausch mit dem Temperatursensor 55 und dem Datenspeicher 56 steht und ferner über das Datenkabel 23 im Datenaustausch mit der Steuereinrichtung im Grundgerät 10.

Neben anderen Funktionen moduliert der im Subgehäuse 24 enthaltene Prozessor 57 die Lichtschranke 36. Durch die Modulation wird die Lichtstärke zeitlich verändert. Im einfachsten Fall wird der Lichtsender 37 ein- und ausgeschaltet. Im Lichtempfänger überlagern sich das modulierte Licht und das aus anderen Lichtquellen stammende Licht, welches nicht im Takt der Modulation ein- und ausgeschaltet wird. Da die anderen Lichtquellen nicht mit der richtigen Frequenz und Phasenlage moduliert sind, kann das Licht des Lichtsenders 37 selektiv erkannt und ausgewertet werden. Durch diese Maßnahme wird die Betriebssicherheit der Lichtschranke deutlich erhöht. Die Modulation ist auch bei abgeschwächter Lichtintensität, z. B. durch Verschmutzung, sinnvoll, da das Modulationssignal von konstanten bzw. gleichbleibenden Signalen zu unterscheiden ist. Sowohl die Steuerung des Lichtsenders als auch die Auswertung des Lichtempfängersignals erfolgt durch den Mikroprozessor 57.

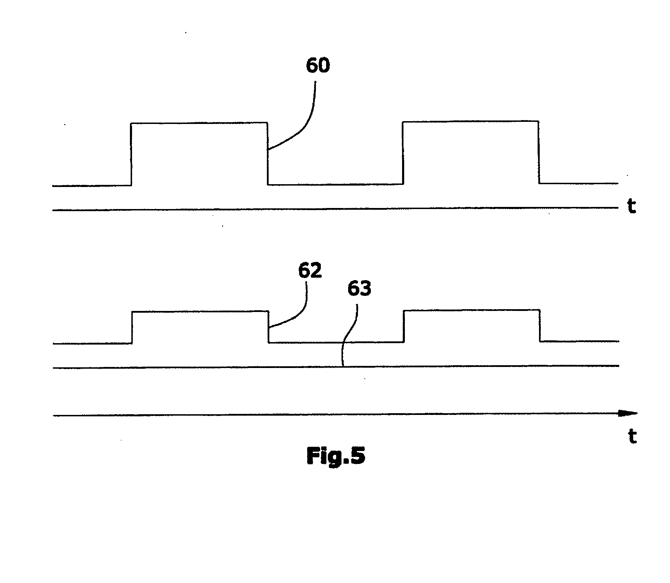

Figur 5 zeigt über der Zeitachse t den zeitlichen Verlauf des Signals 60 des vom Lichtsender ausgesandten modulierten Lichtes sowie das Signal 62, das an dem Lichtempfänger erzeugt wird. Die Signale 60 und 62 sind Impulse. Im Lichtempfänger ist das Signal 62 von einem Störlichtsignal 63 überlagert. Durch die Taktung durch das Signal 60 wird aus dem Signal 62 das empfangene Licht selektiert, so dass der Zustand des Kanals, der von der Lichtschranke 36 überwacht wird, auch unter ungünstigen Bedingungen deutlich erkennbar ist.

Der Prozessor 57 verarbeitet auch die Signale des Temperatursensors 55. Er enthält die Kennlinie des Temperatursensors, die exemplarabhängig ist. In guter Näherung kann bei einem Temperatursensor die Kennlinie als linear angenommen werden, wobei Nullpunkt und Steigung eine Geradengleichung ergeben. Wenn $K_N$ die Steigung der Geraden eines Exemplars und $N_N$ den Nullpunktfehler der Geraden des Exemplars darstellt, gilt

$$T_N = N_N + T_{TAT} \times K_N,$$

wobei $T_N$ die gemessene Temperatur und $T_{TAT}$ die tatsächliche Temperatur ist. Das Abspeichern der Faktoren und die Berechnung der Formel erfolgen in dem Prozessor 57. Weiterhin kann der Prozessor durch Messungenauigkeiten hervorgerufene Schwankungen der gemessenen Temperatur mittels eines durch den Prozessor rechnergestützten Tiefpasses filtern. Die Temperaturausgabe kann nach folgender Formel ermittelt werden:

$$T_A = 0,99 \times T_F + 0,01 \times T_N.$$

Hierin ist $T_A$ die Ausgabetemperatur und $T_F$ die frühere Temperatur. $T_N$ ist die gemessene Temperatur. Durch diese Temperaturkorrektur pendelt sich die Ausgabetemperatur $T_A$ auf den Mittelwert der neu ermittelten Werte $T_N$ ein. Beim nächsten Durchlauf der Berechnung wird der beim vorigen Durchlauf berechnete Wert der Ausgabetemperatur zur früheren Temperatur. Die Temperaturmessung ist wichtig, da die Leckrate temperaturabhängig reagiert. Die Kompensation dieses Störeffektes kann mit gasartabhängigen Näherungsformeln ebenfalls in dem Prozessor realisiert werden.

Der in dem Subgehäuse 24 enthaltene löschbare Datenspeicher 56 ist hier ein EEPROM, das u. a. das Produktionsdatum, die Füllmenge und Angaben über das Testgas enthält. Diese Angaben werden in den Datenspeicher entweder automatisch durch Lesen eines auf dem Testgasbehälter 47 angebrachten Datenträgers oder durch manuelle Eingabe gespeichert.

Bei Gasen, die einen ständig abnehmenden Druck im Behälter haben, wie z. B. Helium, kann mit Hilfe des Fülldatums und der Temperatur die momentane Leckrate genauer ermittelt werden. Die noch vorhandene Leckrate wird für eine gewählte Zeiteinheit, z. B. eine Woche, jeweils mit einem für ein bestimmtes Leck konstanten Faktor multipliziert. Da dieser Faktor bei realen Lecks knapp unter 1 liegt, ergibt sich jede Woche eine etwas niedrigere Leckrate. Eine andere Möglichkeit ergibt sich durch Anwendung einer Näherungsformel. Dabei wird beispielsweise eine lineare Abnahme der Leckrate mit der Zeit angenommen, was für kurze Zeitabschnitte zu akzeptablen Fehlern führt. Wird das Testleck zu alt, so muss es ersetzt werden.

Zur Verschlüsselung der Daten, die in den Datenspeicher 56 eingelesen werden, kann ein für den Bediener nicht lesbarer Code vorgesehen sein, der alle relevanten Daten, sowie eine Prüfsumme der übertragenen Daten enthält.

Ein Beispiel eines solchen Codes ist nachstehend angegeben:

Datum: 25 02 06,

für jede Ziffer x wird ein Wert y eingegeben, der nach der Formel y = 9 -x berechnet wurde. Dann ergibt sich: (9-2) = 7 usw. Die gespeicherte Ziffernfolge lautet dann: 749793.

Die dazugehörende Prüfsumme könnte die Addition aller Stellen sein, wobei nur die Einerstelle Verwendung findet. Die Prüfsumme ergibt sich dann bei dem obigen Beispiel zu: 7 + 4 + 9 + 7 + 9 + 3 = 39. Hiervon wird als Prüfsumme nur die Einerstelle 9 gespeichert.

Die gespeicherten Daten können in dem Prozessor 57 oder auch von dem Steuergerät im Grundgerät 10 dekodiert werden.

**Patentansprüche**

1. Lecksuchgerät mit einem Grundgerät (10), das eine Vakuumpumpe, einen Testgasdetektor und eine Steuerungseinrichtung enthält, einer durch einen Schlauch mit dem Gehäuse (11) des Grundgeräts (10) verbundenen Schnüffelsonde (14) und einem Subgehäuse (24), das eine Testleckeinrichtung (25) enthält, welche einen Testgasvorrat (46) kontrolliert in einen Einsteckkanal (27) für die Schnüffelsonde (14) ablässt,
**dadurch gekennzeichnet,**
**dass** das Subgehäuse (24) einen Prozessor (57) enthält, der mindestens einen Parameter der Testleckeinrichtung verarbeitet und in Datenkommunikation mit der im Gehäuse (11) des Grundgerätes (10) enthaltenen Steuerungseinrichtung steht.

2. Lecksuchgerät nach Anspruch 1, **dadurch gekenn-**zeichnet, dass** das Subgehäuse (24) einen Temperatursensor (55) zur Ermittlung eines Temperaturwertes ($T_N$) des Testgasvorrats (46) enthält, wobei dieser Temperaturwert dem Prozessor (57) als Parameter zugeführt wird.

3. Lecksuchgerät nach Anspruch 2, **dadurch gekennzeichnet, dass** der Prozessor (57) derart ausgebildet bzw. programmiert ist, dass er die tatsächliche Temperatur ($T_{TAT}$) unter Berücksichtigung der Steigung ($K_N$) der Temperaturgeraden des jeweiligen Temperatursensors (55) und eines Nullpunktfehlers ($N_N$) der Temperaturgeraden berechnet.

4. Lecksuchgerät nach Anspruch 2, **dadurch gekennzeichnet, dass** der Prozessor (57) derart ausgebildet bzw. programmiert ist, dass er mit Hilfe eines Tiefpasses durch Messungenauigkeiten hervorgerufene Schwankungen des gemessenen Temperaturwertes ($T_N$) filtert.

5. Lecksuchgerät nach Anspruch 2, **dadurch gekennzeichnet, dass** der Prozessor (57) derart ausgebildet bzw. programmiert ist, dass er das Fülldatum des Testgasbehälters und den Temperaturwert ($T_N$) als Parameter verarbeitet und daraus die noch vorhandene momentane Leckrate ermittelt.

6. Lecksuchgerät nach einem der Ansprüche 1 - 5, **dadurch gekennzeichnet, dass** der Prozessor (57) derart ausgebildet bzw. programmiert ist, dass er das Fülldatum des Testgasbehälters (47) und die ursprüngliche Leckrate als Parameter verarbeitet und daraus die noch vorhandene momentane Leckrate ermittelt.

7. Lecksuchgerät nach einem der Ansprüche 1 - 6, **dadurch gekennzeichnet, dass** das Subgehäuse (24) einen löschbaren Datenspeicher (56) enthält, in dem unter anderem Produktionsdatum, Füllmenge und/oder Leckrate abspeicherbar sind.

8. Lecksuchgerät nach einem der Ansprüche 1 - 7, **dadurch gekennzeichnet, dass** der Einsteckkanal (27) ein Rohr (40) enthält, welches nach außen gegen die Umgebung des Testgasvorrats (46) abgedichtet ist.

9. Lecksuchgerät nach Anspruch 8, **dadurch gekennzeichnet, dass** der Einsteckkanal (27) eine Strahlungsschranke (36) mit einem Strahlungssender (37) und einem Strahlungsempfänger (38) aufweist, die auf unterschiedlichen Seiten des Einsteckkanals (27) angeordnet sind, und dass das Rohr (40) aus strahlungsdurchlässigem Material besteht.

10. Lecksuchgerät nach Anspruch 9, **dadurch gekennzeichnet, dass** die Strahlungsschranke eine Lichtschranke ist und dass das Rohr durchsichtig ist.

11. Lecksuchgerät nach einem der Ansprüche 1 - 10, **dadurch gekennzeichnet, dass** am Einsteckkanal (27) eine Strahlungsschranke (36) vorgesehen ist, die im Modulationsbetrieb arbeitet, wobei der Prozessor (57) derart ausgebildet bzw. programmiert ist, dass das Signal des Strahlungsempfängers (38) der Strahlungsschranke mit Hilfe eines Modulationssignals auswertet, so dass Fremdlichteinflüsse und Verschmutzungseinflüsse eliminiert werden.

12. Lecksuchgerät nach einem der Ansprüche 1 - 11, **dadurch gekennzeichnet, dass** das Subgehäuse (24) in einer nach außen hin offenen Aufnahme des Gehäuses (11) des Grundgerätes (10) herausnehmbar enthalten ist, wobei die Testleckeinrichtung (25) sowohl im herausgenommenen Zustand als auch im eingesetzten Zustand funktionsfähig ist.

13. Lecksuchgerät nach einem der Ansprüche 1 - 12, **dadurch gekennzeichnet, dass** an dem Subgehäuse (24) eine Kartusche (30) zur Aufnahme eines Testgasbehälters (47) befestigt ist.

14. Lecksuchgerät nach Anspruch 13, **dadurch gekennzeichnet, dass** die Kartusche (30) von einer Rückwand des Subgehäuses (24) absteht und dass das Grundgerät (10) einen Tunnel (21) zur Aufnahme der Kartusche (30) aufweist.

15. Lecksuchgerät nach einem der Ansprüche 1 - 13, **dadurch gekennzeichnet, dass** das Subgehäuse (24) mit dem Gehäuse (11) des Grundgerätes wahlweise durch ein Datenkabel (23) oder durch eine kabellose Steckverbindung (22, 32) verbindbar ist.

**Claims**

1. A leak detector with a base appliance (10) comprising a vacuum pump, a tracer gas detector and a control device, a sniffer probe (14) connected with a housing (11) of the base appliance (10) through a hose, and a sub-housing (24) with a test leak device (25) which, in a controlled manner, discharges a tracer gas supply (46) into a plug-in channel (27) for the sniffer probe (14),
**characterized in that**
the sub-housing (24) includes a processor (57) that processes at least one parameter of the test leak device and is in data communication with the control device provided in the housing (11) of the base appliance (10).

2. The leak detector of claim 1, **characterized in that** the sub-housing (24) comprises a temperature sensor (55) for determining a temperature value ($T_N$) of the tracer gas supply (46), this temperature value being supplied to the processor (57) as a parameter.

3. The leak detector of claim 2, **characterized in that** the processor (57) is configured or programmed such that it calculates the actual temperature ($T_{TAT}$) with consideration to the slope ($K_N$) of the straight line of temperature of the respective temperature sensor (55) and a zero point error ($N_N$) of the straight line of temperature.

4. The leak detector of claim 2, **characterized in that** the processor (57) is configured or programmed such that it uses a low pass to filter variations in the measured temperature value ($T_N$) caused by measurement inaccuracies.

5. The leak detector of claim 2, **characterized in that** the processor (57) is configured or programmed such that it processes the filling date of the tracer gas vessel and the temperature value ($T_N$) as parameters and determines therefrom the remaining actual leakage rate.

6. The leak detector of one of claims 1-5, **characterized in that** the processor (57) is configured or programmed such that it processes the filling date of the tracer gas vessel (47) and the initial leakage rate as parameters and determines therefrom the actual leakage rate still given.

7. The leak detector of one of claims 1-6, **characterized in that** the sub-housing (24) comprises an erasable data memory (56), in which, among other information, the manufacturing date, the filling volume and/or the leakage rate may be stored.

8. The leak detector of one of claims 1-7, **characterized in that** the plug-in channel (27) comprises a tube (40) sealed from the outside against the environment of the tracer gas supply (46).

9. The leak detector claim 8, **characterized in that** the plug-in channel (27) has a radiation barrier (36) with a radiation emitter (37) and a radiation receiver (38), which are arranged on different sides of the plug-in channel (27), and wherein the tube (40) is made of a material permeable to radiation.

10. The leak detector of claim 9, **characterized in that** the radiation barrier is a light barrier, and wherein the tube is transparent.

11. The leak detector of one of claims 1-10, **characterized in that** a radiation barrier (36) is provided at the plug-in channel (27), said radiation barrier operating in a modulation mode, wherein the processor (57) is configured or programmed such that it evaluates the signal from the radiation receiver (38) of the radiation barrier using a modulation signal, so that influences caused by interfering light and contamination are eliminated.

12. The leak detector of one of claims 1-11, **characterized in that** the sub-housing (24) is removably accommodated in a receptacle of the housing (11) of the base appliance (10), open to the outside, the test leak device (25) being functional both in the removed state and in the inserted state.

13. The leak detector of one of claims 1-12, **characterized in that** a cartridge (30) is fastened to the sub-housing (24) for receiving a tracer gas vessel (47).

14. The leak detector of claim 13, **characterized in that** the cartridge projects from a rear wall of the sub-housing (24) and the base appliance (10) has a tunnel (21) for receiving the cartridge (30).

15. The leak detector of one of claims 1 - 13, **characterized in that** the sub-housing (24) may optionally be connected with the housing (11) of the base appliance via a data cable (23) or a wireless plug-in connection (22, 32).

## Revendications

1. Détecteur de fuites comprenant un appareil de base (10) avec une pompe à vide, un détecteur de gaz traceur et un moyen de commande, une sonde reniﬂeuse (14) raccordée au boitier (11) de l'appareil de base (10) par un tuyau, et un sous-boitier (24) comprenant un moyen étalon de fuites (25) déversant, d'une manière contrôlée, un stock de gaz traceur (46) dans un canal à enﬁcher (27) pour la sonde reniﬂeuse (14),
   **caractérisé en ce que**
   ledit sous-boitier (24) comprend un processeur (57) qui traite au moins un paramètre dudit moyen étalon de fuites et qui est en communication de données avec le moyen de commande situé dans le boitier (11) dudit appareil de base (10).

2. Détecteur de fuites selon la revendication 1, **caractérisé en ce que** ledit sous-boitier (24) comprend un capteur de température (55) pour déterminer une valeur de température ($T_N$) dudit stock de gaz traceur (46), ladite valeur de température étant fournie au processeur (57) comme paramètre.

3. Détecteur de fuites selon la revendication 2, **caractérisé en ce que** ledit processeur (57) est configuré ou programmé de sorte qu'il calcule la température actuelle ($T_{TAT}$) compte tenu de la pente ($K_N$) de la droite de température du capteur de température (55) respectif et d'une erreur à zéro ($N_N$) de la droite de température.

4. Détecteur de fuites selon la revendication 2, **caractérisé en ce que** ledit processeur (57) est configuré ou programmé de sorte qu'il filtre, à l'aide d'un passe-bas, des variations dans la valeur de température mesurée ($T_N$) causée par des imprécisions de mesurage.

5. Détecteur de fuites selon la revendication 2, **caractérisé en ce que** ledit processeur (57) est configuré ou programmé de sorte qu'il traite la date de remplissage du conteneur de gaz traceur et la valeur de température ($T_N$) comme paramètres et détermine de cela le taux de fuite instantané résiduel.

6. Détecteur de fuites selon l'une quelconque des revendications 1-5, **caractérisé en ce que** ledit processeur est configuré ou programmé de sorte qu'il traite la date de remplissage du conteneur de gaz traceur et le taux de fuite initial comme paramètres et détermine de cela le taux de fuite instantané résiduel.

7. Détecteur de fuites selon l'une quelconque des revendications 1-6, **caractérisé en ce que** le sous-boitier (24) comprend une mémoire de données (56) effaçable dont laquelle on peut stocker, en outre, la date de manufacture, la contenance et /ou le taux de fuite.

8. Détecteur de fuites selon l'une quelconque des revendications 1-7, **caractérisé en ce que** le canal à enficher (27) comprend un tube (40) étanchéifié vers l'extérieur par rapport à l'ambiance du stock de gaz traceur (46).

9. Détecteur de fuites selon la revendication 8, **caractérisé en ce que** ledit canal à enfiler (27) comprend une barrière de rayonnement (36) avec un émetteur de rayonnement (37) et un récepteur de rayonnement (38), arrangés sur des côtés différents dudit canal à enfiler (27), et que le tube (40) consiste en un matériau perméable au rayonnement.

10. Détecteur de fuites selon la revendication 9, **caractérisé en ce que** ledit la barrière de rayonnement est une barrière lumineuse et que le tube est transparent.

11. Détecteur de fuites selon l'une quelconque des revendications 1-10, **caractérisé en ce qu'**une barrière de rayonnement (36) est prévue au canal è enfiler (27), ladite barrière opérant dans un mode de modulation, le processeur (57) étant configuré ou programmé pour évaluer le signal du récepteur de rayonnement (38) de ladite barrière de rayonnement à l'aide d'un signal de modulation de sorte que des influences de lumière étrangère et des influences de contaminations sont éliminés.

**12.** Détecteur de fuites selon l'une quelconque des revendications 1-11, **caractérisé en ce que** le sous-boitier (24) est tenu de manière amovible dans un logement du boitier (11) de l'appareil de base (10), ledit logement étant ouvert vers l'extérieur, ledit moyen étalon de fuite (25) étant opérationnel soit dans l'état enlevé, soit dans l'état installé.

**13.** Détecteur de fuites selon l'une quelconque des revendications 1-12, **caractérisé en ce que** le sous-boitier (24) est muni d'une cartouche (30) pour accommoder un réceptacle de gaz traceur (47).

**14.** Détecteur de fuites selon la revendication 13, **caractérisé en ce que** la cartouche (30) est en saillie de la paroi du sous-boitier (24) et que l'appareil de base (10) comprend un tunnel (21) pour accommoder la cartouche (30).

**15.** Détecteur de fuites selon l'une quelconque des revendications 1-13, **caractérisé en ce que** le sous-boitier (24) est apte à être raccordé au boitier (11) de l'appareil de base sélectivement par un fil de données (23) ou un connecteur sans fil (22, 32).

**Fig.1**

**Fig.2**

**Fig.3**

**Fig.4**

**60**

**62**  **63**

**Fig.5**

**EP 2 032 962 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02084246 A2

- DE 10308687 A1

13